# EUROPÄISCHE PATENTSCHRIFT

(11) **EP 1 881 867 B1**
(45) Veröffentlichungstag und Bekanntmachung des Hinweises auf die Patenterteilung: **01.06.2016**
(21) Anmeldenummer: 06742714.6
(22) Anmeldetag: 27.04.2006
(51) Int. Cl.: B01D 53/86

(54) **VERFAHREN ZUR VERRINGERUNG DES GEHALTES AN STICKOXIDEN IN GASEN**
METHOD FOR REDUCING THE NITROGEN OXIDE CONCENTRATION IN GASES
PROCEDE POUR REDUIRE LA TENEUR EN OXYDES D'AZOTE DE GAZ

(30) Priorität: 11.05.2005 DE 102005022650
(43) Veröffentlichungstag der Anmeldung: 30.01.2008
(60) Teilanmeldung: 16162227.9
(73) Patentinhaber: ThyssenKrupp Industrial Solutions AG, 45143 Essen (DE)
(72) Erfinder: SCHWEFER, Meinhard, 59872 Meschede (DE); SIEFERT, Rolf, 33378 Rheda-Wiedenbrück (DE); GROVES, Michael, 58285 Gevelsberg (DE)
(74) Vertreter: Wolff, Felix
(86) Internationale Anmeldenummer: PCT/EP2006/003895
(87) Internationale Veröffentlichungsnummer: WO 2006/119870

(56) Entgegenhaltungen:
- WO-A-00/48715
- WO-A-01/51181
- WO-A-02/087733
- WO-A-03/084646
- WO-A-03/105998
- US-A- 4 571 329
- US-A1- 2002 127 163

## Beschreibung

Die vorliegende Erfindung betrifft ein Verfahren zur Verringerung Gehaltes an Stickoxiden in Gasen.

Bei vielen Prozessen, wie z.B. Verbrennungsprozessen oder bei der industriellen Herstellung von Salpetersäure resultiert ein mit Stickstoffmonoxid NO, Stickstoffdioxid NO₂ (zusammen bezeichnet als NOₓ) sowie Lachgas N₂O beladenes Abgas. Sowohl NO und NO₂ als auch N₂O sind als Verbindungen mit ökotoxischer Relevanz bekannt (Saurer Regen, Smog-Bildung, Abbau von stratosphärischem Ozon). Es besteht daher aus Gründen des Umweltschutzes ein dringender Bedarf an technischen Lösungen, die Lachgasemissionen zusammen mit den NOₓ-Emissionen zu beseitigen.

Neben der separaten Beseitigung von N₂O einerseits und von NOₓ andererseits sind auch bereits kombinierte Verfahren zur Beseitigung dieser Stickoxide vorgeschlagen worden.

Aus WO-A-00/48715 ist ein Verfahren bekannt, bei dem ein NOₓ und N₂O enthaltendes Abgas bei Temperaturen zwischen 200 und 600°C über einen Eisen-Zeolith-Katalysator vom Typ Beta geleitet wird. Dem Abgas wurde Ammoniak in einem Mengenverhältnis zwischen 0,7 und 1,4 bezogen auf die Gesamtmenge an NOₓ und N₂O zugesetzt. Ammoniak dient hier als Reduktionsmittel sowohl für NOₓ als auch für N₂O.

Aus WO-A-03/84646 ist ein Verfahren bekannt, bei dem ein NOₓ und N₂O enthaltendes Gas mit einem Stickstoff enthaltenden Reduktionsmittel in einer solchen Menge versetzt wird, wie mindestens zur vollständigen Reduktion des NOₓ benötigt wird, weiterhin dem Gas zur N₂O-Reduktion Kohlenwasserstoff, Kohlenmonoxid und/oder Wasserstoff zugesetzt wird und dieses Gemisch dann in mindestens eine Reaktionszone mit Temperaturen bis zu 450°C geleitet wird, die einen oder mehrere mit Eisen beladene Zeolithe enthält.

Aus WO-A-01/51,181 ist ein Verfahren zur Beseitigung von NOₓ und N₂O bekannt, worin ein Prozess- oder Abgas durch zwei Reaktionszonen geleitet wird, die mit Eisen beladene Zeolithe als Katalysatoren enthalten. In der ersten Reaktionszone wird dabei N₂O katalytisch in Stickstoff und Sauerstoff zersetzt, zwischen der ersten und der zweiten Reaktionszone wird dem Gasgemisch Ammoniak zugesetzt und in der zweiten Reduktionszone wird NOₓ durch Reaktion mit Ammoniak chemisch reduziert. Das Verfahren arbeitet mit vergleichsweise geringen Mengen an Ammoniak, da das Reduktionsmittel nur für die Reduktion des NOₓ eingesetzt wird.

Eine Weiterentwicklung des aus WO-A-01/51,181 bekannten Verfahrens wird in WO-A-03/105,998 offenbart. Darin wird ein Prozess- oder Abgas bei erhöhtem Druck durch zwei Reaktionszonen geleitet, die mit Eisen beladene Zeolithe als Katalysatoren enthalten. In der ersten Reaktionszone werden aber höchstens 90 % des im Gas enthaltenen N₂O katalytisch in Stickstoff und Sauerstoff zersetzt. Anschließend wird zwischen der ersten und der zweiten Reaktionszone dem Gasgemisch ein Reduktionsmittel für NOₓ zugesetzt, so dass NOₓ in dieser zweiten Reaktionszone reduziert wird. Zusätzlich wird das aus der ersten Stufe verbliebene N₂O in dieser zweiten Stufe zumindest teilweise in Stickstoff und Sauerstoff zersetzt. Auch bei diesem Verfahren wird dem Gasgemisch nur soviel an Reduktionsmittel zugesetzt, wie zur Reduktion des NOₓ erforderlich ist.

Die vorgenannten zweistufigen Verfahren zur Beseitigung von NOₓ und N₂O haben den Vorteil, daß für die katalytische Zersetzung des N₂O kein Reduktionsmittel verwendet werden muß. Abgase aus technischen Prozessen können erhebliche Mengen von N₂O enthalten. So weisen beispielsweise Abgase aus dem Salpetersäureverfahren im allgemeinen deutliche größere Mengen an N₂O als an NOₓ auf. Diese zweistufigen Verfahren zur N₂O Zersetzung sind unter dem Gesichtspunkt des Verbrauchs an Reduktionsmittel also sehr wirtschaftlich. Nachteilig an diesen Verfahren ist allerdings, daß die katalytische Zersetzung von N₂O eine Reaktion erster Ordnung ist. Das hat zur Folge, daß bei hohen Anforderungen an den Reinheitsgrad des behandelten Abgases bzw. an den Abbaugrad von N₂O der Bedarf an Katalysator exponentiell ansteigt und sehr große Mengen an Katalysator eingesetzt werden müßten.

Bei Verfahren, welche den Abbau des Gehalts an Stickoxiden, also von NOₓ und von N₂O, durch chemische Reduktion bewirken, wie die aus WO-A,-00148,715 oder WO-A-03/84,646 bekannten Verfahren, ist die Begrenzung der Abbaurate durch die Katalysatormenge nur von untergeordneter Bedeutung. Im Vergleich zu den zweistufigen Verfahren hat die gemeinsame Reduktion von NOₓ und N₂O den Vorteil, daß das erforderliche Katalysatorvolumen gerade für hohe Abbauraten an N₂O deutlich kleiner sein kann, da die N₂O-Reduktion über einen weiten Temperaturbereich nicht exponentiell vom Katalysatorvolumen abhängt, sondern im wesentlichen nur von der zugesetzten Menge an Reduktionsmittel beeinflußt wird. Nachteilig ist jedoch, daß zur Beseitigung des Gehaltes an Stickoxiden, insbesondere an N₂O, entsprechend hohe Mengen an Reduktionsmittel benötigt werden.

Mit der vorliegenden Erfindung werden die Vorteile der vorstehend beschriebenen ein- und zweistufigen Verfahren kombiniert, ohne dass deren Nachteile zum Tragen kommen.

Es wurde jetzt überraschenderweise gefunden, dass die Effektivität und Wirtschaftlichkeit des aus der WO-A-03/105,998 bekannten Verfahrens nochmals deutlich gesteigert werden kann, wenn dem Gasgemisch nach Verlassen der ersten Stufe zusätzlich zum Reduktionsmittel für NOₓ auch ein Reduktionsmittel für N₂O zugesetzt wird, so dass in der zweiten Stufe neben der chemischen Reduktion des NOₓ auch eine chemische Reduktion des N₂O erfolgt.

Aufgabe der vorliegenden Erfindung ist es, ein einfaches, aber wirtschaftliches Verfahren zur Verfügung zu stellen, das gute Umsätze sowohl für den NOₓ-Abbau als auch für den N₂O-Abbau bei gleichzeitig minimalen Betriebs- und Investitionskosten liefert. Das erfindungsgemäße Verfahren zeichnet sich durch besonders niedrige benötigte Mengen an Katalysator bei gleichzeitig hohen Anforderungen an den Reinheitsgrad des behandelten Gasgemisches und einen geringeren Verbrauch an Reduktionsmittel aus.

Diese Aufgabe wird durch das erfindungsgemäße Verfahren gelöst.

Gegenstand der Erfindung ist ein Verfahren zur Minderung des Gehalts von NOₓ und N₂O in Gasen, insbesondere in Prozessgasen und Abgasen, umfassend die Massnahmen:
a) Leiten des N₂O und NOₓ enthaltenden Gases über zwei Katalysatorbetten, von denen das erste einen Katalysator für die Zersetzung von N₂O in Stickstoff und Sauerstoff enthält und das zweite Katalysatorbett einen Katalysator für die chemische Umsetzung von NOₓ und N₂O mit einem Reduktionsmittel enthält,
b) Auswahl von Temperatur, Druck und Raumgeschwindigkeit im ersten Katalysatorbett, so dass in diesem ein Abbau des N₂O-Gehalts des Gases um höchstens bis zu 95% erfolgt, bezogen auf den N₂O Gehalt am Eingang des ersten Katalysatorbettes, und
c) Zugabe eines Reduktionsmittels für NOₓ und eines Reduktionsmittels für N₂O zwischen dem ersten und zweiten Katalysatorbett in einer solchen Menge, die für den chemischen Abbau des gesamten NOₓ und mindestens 50 % des N₂O, bezogen auf den N₂O Gehalt am Eingang des zweiten Katalysatorbettes, ausreicht, wobei als Reduktionsmittel für NOₓ und als Reduktionsmittel für N₂O Ammoniak eingesetzt wird.

Während im ersten Katalysatorbett der N20-Abbau ausschließlich durch katalytische Zersetzung in Stickstoff und Sauerstoff erfolgt, wird der Abbau des N₂O-Gehalts im zweiten Katalysatorbett überwiegend durch das Reduktionsmittel bewirkt. Die Steuerung des Abbaus des Gehalts an N₂O erfolgt beim erfindungsgemäßen Verfahren also anders als beim aus der WO-A-03/105,998 bekannten Verfahren durch die Zugabe des Reduktionsmittels für N₂O, so dass neben dem NOₓ-Abbau auch die chemische Reduktion von N₂O erfolgt. Infolge des Einsatzes von Reduktionsmittel für den N₂O-Abbau ist der Einsatz vergleichsweise geringer Mengen an Katalysator möglich. Auch die Katalysatormenge im ersten Katalysatorbett kann verringert werden, indem man bei vorgegebenen Betriebsparametern, wie Temperatur, Druck und Volumenstrom des Gases, den Prozentsatz des in dieser Stufe abzubauenden N₂O verringert und den Prozentsatz des in der zweiten Stufe abzubauenden N₂O entsprechend erhöht.

Das erfindungsgemäße Verfahren ermöglicht es damit, sowohl die Reduktion des Gehalts von N₂O und NOₓ bei einer niedrigen Betriebstemperatur und bei wirtschaftlichen Raumgeschwindigkeiten in Gegenwart geringerer Mengen an Reduktionsmittel durchzuführen und gleichzeitig sehr hohe Abbauraten von N₂O und NOₓ zu erzielen.

Im Falle eines Abgases aus einer Salpetersäureanlage liegt der Gehalt an N₂O nach Verlassen des ersten Katalysatorbettes beim erfindungsgemäßen Verfahren vorzugsweise oberhalb von 50 ppm, besonders bevorzugt oberhalb von 100 ppm, und insbesondere oberhalb von 150 ppm. Im ersten Katalysatorbett erfolgt eine höchstens 95 %ige, vorzugsweise höchstens 90 %ige, insbesondere 50 bis 90 %ige, besonders bevorzugt 70 bis 90%ige Minderung des zu Beginn des ersten Katalysatorbettes vorhandenen N₂O-Gehaltes.

Nach dem Verlassen des ersten Katalysatorbettes wird das N₂O und NOₓ enthaltende Gas mit einem Reduktionsmittel für NOₓ und mit einem Reduktionsmittel für N₂O gemischt. Dabei handelt es sich um die gleiche chemische Verbindung, nämlich um Ammoniak. Die Zugabe der Reduktionsmittel kann an einem Ort direkt nach dem ersten Katalysatorbett erfolgen oder die Reduktionsmittel können örtlich versetzt zugeführt werden, d.h., das zweite Katalysatorbett kann in eine Zone für die NOₓ-Reduktion und in eine nachgeschaltete Zone für die N₂O-Reduktion aufgeteilt werden.

Im zweiten Katalysatorbett erfolgt neben dem vollständigen Abbau des NOₓ eine zusätzliche mindestens 50 %ige, vorzugsweise mindestens 70%ige Minderung, des zu Beginn des zweiten Katalysatorbettes vorhandenen N₂O-Gehaltes.

Unter dem vollständigen Abbau des NOₓ wird im Rahmen dieser Beschreibung eine Verringerung des Anteils des NOₓ im Gasgemisch bis auf einen Restgehalt von kleiner als 20 ppm, vorzugsweise von kleiner als 10 ppm, besonders bevorzugt von kleiner als 5 ppm und ganz besonders bevorzugt von kleiner als 1 ppm verstanden.

Die Temperatur des Gasstromes im ersten Katalysatorbett, in dem nur das N₂O abgebaut wird, sowie im zweiten Katalysatorbett, in dem N₂O und NOₓ abgebaut werden, liegt erfindungsgemäß unterhalb von 500 °C, vorzugsweise im Bereich von 300 bis 450°C, und ganz besonders bevorzugt bei 350 bis 450°C. Die Temperatur bei Eintritt in das zweite Katalysatorbett entspricht bevorzugt der Temperatur am Austritt des ersten Katalysatorbettes. Bei einer räumlichen Trennung der Katalysatorbetten ist es möglich, die Temperatur des zweiten Katalysatorbettes bzw. des darin eintretenden Gasstromes durch Wärmeabfuhr oder -zufuhr so einzustellen, dass sie niedriger oder höher als die des ersten Katalysatorbettes ist. Die Temperatur eines einzelnen Katalysatorbettes lässt sich zweckmäßig als arithmetischer Mittelwert der Temperatur des Gasstromes am Ein- und Austritt des Katalysatorbettes bestimmen.

Die Wahl der Betriebstemperatur ist dabei ebenso wie gewählten Raumgeschwindigkeiten bestimmt durch den gewünschten Abbaugrad an N₂O.

Die Auswahl von Druck, Temperatur, Volumenstrom und Katalysatormenge im ersten Katalysatorbett erfolgt derart, daß dort höchstens 95 %, vorzugsweise höchstens 90 %, insbesondere 50 bis 90% und ganz besonders bevorzugt 70 bis 90 % des zu Beginn des ersten Katalysatorbettes vorhandenen N₂O zersetzt werden.

Die Auswahl von Menge an Reduktionsmittel bzw. Reduktionsmittelgemisch, Druck, Temperatur, Volumenstrom und Katalysatormenge im zweiten Katalysatorbett erfolgt derart, daß dort neben der vollständigen Reduktion des NOₓ ein weiterer Abbau des N₂O-Gehalts des Gases durch chemische Reduktion um mindestens 50%, bezogen auf den N₂O Gehalt am Eingang des zweiten Katalysatorbettes, erfolgt.

Das erfindungsgemäße Verfahren wird im allgemeinen bei einem Druck im Bereich von 1 bis 50 bar, vorzugsweise bei einem erhöhten Druck von mindestens 2 bar, insbesondere mindestens 3 bar, ganz besonders bevorzugt von 4 bis 25 bar durchgeführt, wobei ein höherer Betriebsdruck den Verbrauch an Reduktionsmittel und die Nebenproduktbildung verringert.

Unter dem Begriff Raumgeschwindigkeit ist im Rahmen dieser Beschreibung der Quotient aus Volumenanteilen Gasgemisch (gemessen bei 0 °C und 1,014 bara) pro Stunde bezogen auf einen Volumenanteil Katalysator zu verstehen. Die Raumgeschwindigkeit kann somit über den Volumenstrom des Gases und/oder über die Katalysatormenge eingestellt werden.

Das mit Stickstoffoxiden beladene Gas wird üblicherweise mit einer Raumgeschwindigkeit von 200 bis 200.000 h⁻¹, vorzugsweise von 5.000 bis 100.000 h⁻¹, insbesondere von 5.000 bis 50.000 h⁻¹, bezogen auf das addierte Katalysatorvolumen beider Katalysatorbetten, über den Katalysator geleitet.

Als Reduktionsmittel für NOₓ und als Reduktionsmittel für N₂O wird Ammoniak eingesetzt.

Im erfindungsgemäßen Verfahren ist die zugesetzte Menge an Reduktionsmittel nennenswert größer, als bei den gewählten Reaktionsbedingungen (Druck, Temperatur, Raumgeschwindigkeit) zur Reduktion von NOₓ erforderlich ist.

Die Reduktionsmittel werden in solchen Mengen zugesetzt, wie zur vollständigen Reduktion des NOₓ und zumindest 50 % des im zweiten Katalysatorbett verbliebenen Teils an N₂O benötigt wird. Die dafür benötigten Mengen an Reduktionsmittel sind von der Art des Reduktionsmittels abhängig und können vom Fachmann durch Routineexperimente ermittelt werden.

Im Falle von Ammoniak als Reduktionsmittel für NOₓ verwendet man 0,9 bis 2,5, vorzugsweise 0,9 bis 1,4, besonders bevorzugt 1,0 bis 1,2 molare Anteile an Ammoniak, bezogen auf einen molaren Anteil an NOₓ.

Im Falle von Ammoniak als Reduktionsmittel für N₂O verwendet man 0,5 bis 2,0, vorzugsweise 0,8 bis 1,8 molare Anteile an Ammoniak, bezogen auf einen molaren Anteil an abzubauendem N₂O.

Die Art der Einbringung der Reduktionsmittel in den zu behandelnden Gasstrom ist im Sinne der Erfindung frei gestaltbar, solange dieses in Stromrichtung vor dem zweiten Katalysatorbett erfolgt. Sie kann zum Beispiel in der Eintrittsleitung vor dem Behälter für das zweite Katalysatorbett oder unmittelbar vor dem Katalysatorbett erfolgen. Das Reduktionsmittel kann in Form eines Gases oder auch einer Flüssigkeit bzw. wässrigen Lösung eingebracht werden, die im zu behandelnden Gasstrom verdampft. Die Einspeisung erfolgt durch eine geeignete Vorrichtung, wie z.B. einem entsprechenden Druckventil oder entsprechend ausgestalteten Düsen, die in einen Mischer für den zu reinigenden Gasstrom und das zugeführte Reduktionsmittel mündet. Bei Verwendung verschiedener Reduktionsmittel für NOₓ und N₂O kann die Zuführung und Einleitung in das zu reinigende Gas getrennt oder zusammen erfolgen.

Im ersten Katalysatorbett kommen Katalysatoren zum Einsatz, welche die Zersetzung von N₂O in Stickstoff und Sauerstoff fördern. Solche Katalysatoren sind an sich bekannt und es können unterschiedlichste Stoffklassen verwendet werden. Beispiele dafür sind Metall-beladene Zeolith-Katalysatoren, beispielsweise mit Kupfer oder insbesondere mit Eisen beladene Zeolith-Katalysatoren, Edelmetall-Katalysatoren oder auch Übergangsmetalloxid-Katalysatoren, wie z.B. Cobaltoxid enthaltendende Katalysatoren.

Beispiele für geeignete Katalysatoren sind unter anderem von Kapteijn et al. in Appl. Cat. B: Environmental 9 (1996), 25-64), in US-A-5, 171, 553, in Actes du 2ieme Congres International sur la Catalyse, Technip, Paris 1961, 1937-1953, sowie in WO-A-01/58,570 beschrieben.

Bei der Verwendung von mit Eisen beladenen Zeolith-Katalysatoren im ersten Katalysatorbett zur reinen N₂O-Zersetzung beschleunigt dabei das noch im Gas vorhandene NOₓ erwartungsgemäß die gewünschte N₂O Zersetzung durch eine aktivierende Wirkung, wie diese für unterschiedliche N₂O/NOₓ-Verhältnisse von Kögel et al. in Catal. Comm. 2 (2001)273-6 beschrieben wurde.

Im zweiten Katalysatorbett kommen Katalysatoren zum Einsatz, welche die chemische Umsetzung von NOₓ und/oder N₂O mit Reduktionsmitteln fördern. Solche Katalysatoren sind ebenfalls an sich bekannt und es können ebenfalls unterschiedlichste Stoffklassen verwendet werden. Beispiele dafür sind Metall-beladene Zeolith-Katalysatoren, wie mit Kupfer oder Cobalt beladene Zeolith-Katalysatoren, oder insbesondere mit Eisen beladene Zeolith-Katalysatoren, oder Edelmetall-Katalysatoren oder Katalysatoren, die in dem SCR-Verfahren (Selective Catalytic Reduktion) eingesetzt werden.

Bevorzugt werden im zweiten Katalysatorbett und besonders bevorzugt im ersten und zweiten Katalysatorbett eisenhaltige Zeolithe eingesetzt. Dabei kann es sich um unterschiedliche Katalysatoren in den jeweiligen Katalysatorbetten oder um gleiche Katalysatoren handeln.

Erfindungsgemäß besonders bevorzugt eingesetzte mit Eisen-beladene Zeolith-Katalysatoren enthalten im wesentlichen, vorzugsweise > 50 Gew.%, insbesondere > 70 Gew.% eines oder mehrerer mit Eisen beladener Zeolithe. So kann beispielsweise neben einem Fe-ZSM-5 Zeolith ein weiterer Eisen enthaltender Zeolith, wie z.B. ein eisenhaltiger Zeolith des FER-Typs, in dem erfindungsgemäß verwendeten Katalysator enthalten sein.

Darüber hinaus kann der erfindungsgemäß verwendete Katalysator weitere dem Fachmann bekannte Zusatzstoffe, wie z.B. Bindemittel enthalten.

Erfindungsgemäß verwendete Katalysatoren basieren ganz besonders bevorzugt auf Zeolithen, in die durch einen Festkörper-Ionenaustausch Eisen eingebracht wurde. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur (Turek et al.; Appl. Catal. 184, (1999) 249-256; EP-A-0 955 080. Die erhaltenen Katalysatorpulver werden anschließend in einem. Kammerofen an der Luft bei Temperaturen im Bereich von 400 bis 600°C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilikate wie z.B. Kaolin.

Der Eisengehalt der bevorzugt eingesetzten Zeolithe kann dabei bezogen auf die Masse an Zeolith bis zu 25% betragen, vorzugsweise jedoch 0,1 bis 10%.

Im ersten Katalysatorbett des erfindungsgemäßen Verfahrens werden ganz besonders bevorzugt mit Eisen beladene Zeolithe vom Typ MFI und/oder FER eingesetzt, insbesondere ein mit Eisen beladener ZSM-5 Zeolith.

Im zweiten Katalysatorbett des erfindungsgemäßen Verfahrens werden ganz besonders bevorzugt mit Eisen beladene Zeolithe vom Typ MFI, BEA, FER, MOR, FAU und/oder MEL eingesetzt, insbesondere mit Eisen beladene Zeolithe vom Typ MFI und/oder BEA, ganz besonders bevorzugt ein mit Eisen beladener ZSM-5 Zeolith.

Im erfindungsgemäßen Verfahren ist auch der Einsatz solcher Zeolithe eingeschlossen, in welchen das Gitteraluminium teilweise durch ein oder mehrere Elemente isomorph substituiert ist, beispielsweise durch ein oder mehrere Elemente ausgewählt aus B, Be, Ga, Fe, Cr, V, As, Sb und Bi ersetzt ist: Ebenso eingeschlossen ist der Einsatz von Zeolithen, bei denen das Gittersilicium durch ein oder mehrere Elemente isomorph substituiert ist, beispielsweise durch ein oder mehrere Elemente ausgewählt aus Ge, Ti, Zr und Hf ersetzt ist.

Genaue Angaben zum Aufbau oder Struktur der erfindungsgemäß bevorzugt eingesetzten Zeolithe werden im Atlas of Zeolite Structure Types, Elsevier, 4th revised Edition 1996, gegeben, auf den hiermit ausdrücklich Bezug genommen wird.

Ganz besonders bevorzugt kommen im erfindungsgemäßen Verfahren die weiter oben definierten Zeolith-Katalysatoren zum Einsatz, die mit Wasserdampf behandelt worden sind ("gesteamte" Katalysatoren). Durch eine derartige Behandlung wird das Gitter des Zeolithen dealuminiert; diese Behandlung ist dem Fachmann an sich bekannt. Überraschenderweise zeichnen sich diese hydrothermal behandelte Zeolith-Katalysatoren im erfindungsgemäßen Verfahren durch eine besonders hohe Aktivität aus.

Bevorzugt werden hydrothermal behandelte Zeolith-Katalysatoren eingesetzt, die mit Eisen beladen worden sind und bei denen das Verhältnis von Extra-Gitter-Aluminium zu Gitter-Aluminium mindestens 1 : 2 beträgt, vorzugsweise 1:2 bis 20:1 beträgt.

Der Wassergehalt des Reaktionsgases liegt vorzugsweise im Bereich von <25 Vol.%, insbesondere im Bereich <15 Vol.%. Ein niedriger Wassergehalt ist im allgemeinen zu bevorzugen.

Im allgemeinen wird eine relativ niedrige Wasserkonzentration bevorzugt, da höhere Wassergehalte höhere Betriebstemperaturen erforderlich machen würden. Diese könnte je nach eingesetztem Zeolithtyp und Betriebsdauer die hydrothermalen Stabilitätsgrenzen des Katalysators überschreiten und ist somit dem jeweils gewählten Einzelfall anzupassen.

Auch die Anwesenheit von CO₂ sowie von anderen desaktivierenden Bestandteilen des Reaktionsgases, die dem Fachmann bekannt sind, sollten nach Möglichkeit minimiert werden, da sich diese negativ auf den N₂O-Abbau auswirken würden.

Das erfindungsgemäße Verfahren arbeitet auch in Gegenwart von O₂, da die erfindungsgemäß verwendeten Katalysatoren entsprechende Selektivitäten aufweisen, die bei Temperaturen <500°C eine Reaktion der gasförmigen Reduktionsmittel, wie NH₃, mit O₂ unterdrücken.

All diese Einflussfaktoren, sowie die gewählte Katalysatorbelastung d.h. Raumgeschwindigkeit sind bei der Wahl der geeigneten Betriebstemperatur der Reaktionszone zu berücksichtigen.

Das erfindungsgemäße Verfahren kann besonders bei der Salpetersäureproduktion, bei Kraftwerksabgasen oder bei Gasturbinen zum Einsatz kommen. In diesen Prozessen fallen stickoxidhaltige Prozeß- und Abgase an, die mit Hilfe des hier aufgezeigten Verfahrens kostengünstig entstickt werden können. Das erfindungsgemässe Verfahren wird zweckmäßigerweise im Restgas der Salpetersäureproduktion nach dem Absorptionsturm eingesetzt.

Die Ausführung der Katalysatorbetten ist im Sinne der Erfindung frei gestaltbar. So kann beispielsweise der Katalysator oder die Katalysatoren in einem axial oder vorzugsweise radial durchströmten Katalysatorbett angeordnet sein, die in einem oder mehreren Behältern untergebracht sind.

Das erfindungsgemäße Verfahren wird durch die nachfolgenden Beispiele erläutert.

Als Katalysator wurde ein mit Eisen beladener ZSM-5 Zeolith eingesetzt. Die Herstellung des Fe-ZSM-5-Katalysators erfolgte durch Festkörper-Ionentausch ausgehend von einem kommerziell verfügbaren Zeolith in Ammonium-Form (ALSI-PENTA, SM27). Detaillierte Angaben zur Präparation können entnommen werden aus: M. Rauscher, K. Kesore, R. Mönnig, W. Schwieger, A. Tißler, T. Turek: "Preparation of highly active Fe-ZSM-5 catalyst through solid state ion exchange for the catalytic decomposition of N2O" in Appl. Catal. 184 (1999) 249-256.

Die Katalysatorpulver wurden an der Luft für 6h bei 823K kalziniert, gewaschen und über Nacht bei 383K getrocknet. Nach Zusatz entsprechender Binder folgte die Extrusion zu zylindrischen Katalysatorkörpern.

Als Vorrichtung zur Minderung des NOₓ- und N₂O-Gehaltes kamen bei Beispielen 1 und 3 zwei hintereinander geschaltete Rohrreaktoren zum Einsatz, welche mit einer solchen Menge an obigem Katalysator befüllt waren, dass bezogen auf den eintretenden Gasstrom eine Raumgeschwindigkeit von 15.000 h⁻¹ für das erste Katalysatorbett und eine Raumgeschwindigkeit von 40.000 h⁻¹ für das zweite Katalysatorbett resultierte. Zwischen den beiden Reaktionszonen erfolgt die Zugabe von NH₃-Gas. In Beispiel 1 (nicht erfindungsgemäß) wurde gerade soviel an Ammoniak zugesetzt (525 ppm), wie zur NOₓ Reduktion erforderlich war. In Beispiel 3 (erfindungsgemäß) wurde eine zusätzliche Menge an Ammoniak für die N₂O Reduktion zugesetzt (insgesamt 925 ppm).

Das nicht erfindungsgemäße Beispiel 2 wurde in einer Vorrichtung durchgeführt, welche der oben beschriebenen Vorrichtung entsprach mit der Abänderung, dass nur der zweite Rohrreaktor anwesend war (Raumgeschwindigkeit von 40.000 h⁻¹). In Beispiel 2 wurde eine solche Menge an Ammoniak zugesetzt (insgesamt 1.800 ppm), dass neben dem NOₓ ein Teil des N₂O chemisch abgebaut wurde; allerdings ohne eine vorgeschaltete Zersetzungsstufe für das N₂O.

Die Betriebstemperatur in den Reaktionszonen wurde durch Beheizung eingestellt. Die Analyse der in die Reaktoren ein- und austretenden Gasströme erfolgte mit Hilfe eines FTIR-Gasanalysators.

Die Eingangskonzentrationen bei Eintritt in die Versuchsanordnung betrugen: etwa 1.100 ppm N₂O, etwa 430 ppm NOₓ, etwa 3.000 ppm H₂O und etwa 1 %vol O₂ in N₂.

Zwischen dem ersten und zweiten Katalysatorbett bzw. bei Beispiel 2 am Eingang des Rohrreaktors wurden die in den nachfolgenden Tabellen angegebenen Mengen an Ammoniak eingeleitet. Die Reaktoren wurden bei einer einheitlichen Betriebstemperatur von 430°C und einem einheitlichen Betriebsdruck von 6,5 bar betrieben. Die Ergebnisse sind in den folgenden Tabellen dargestellt.

**Tabelle 1: Beispiel 1**

| | | Eintrittskonzentration (ppm) | Austrittskonzentration (ppm) | Abbaugrad (%) |
|---|---|---|---|---|
| Katalysatorbett 1 | N₂O | 1094 | 305 | 72 |
| | NOₓ | 436 | 432 | 0 |
| Katalysatorbett 2 | NH₃ | 525 | 0 | 100 |
| | NO_{X} | 432 | 9 | 98 |
| | N₂O | 305 | 237 | 22 |
| Gesamt | N₂O | | | 78 |
| | NOₓ | | | 98 |

**Tabelle 2: Beispiel 2**

| | | Eintrittskonzentration (ppm) | Austrittskonzentration (ppm) | Abbaugrad (%) |
|---|---|---|---|---|
| Katalysatorbett | NH₃ | 525 | 0 | 100 |
| | NH₃ | 1275 | 0 | 100 |
| | N₂O | 1108 | 85 | 92 |
| | NOₓ | 439 | 0 | 100 |
| Gesamt | N₂O | | | 92 |
| | NOₓ | | | 100 |

**Tabelle 3: Beispiel 3**

| | | Eintrittskonzentration (ppm) | Austrittskonzentration (ppm) | Abbaugrad (%) |
|---|---|---|---|---|
| Katalysatorbett 1 | N₂O | 1087 | 308 | 72 |
| | NO_{X} | 435 | 434 | 0 |
| Katalysatorbett 2 | NH₃ | 525 | 0 | 100 |
| | NH₃ | 400 | 0 | 100 |
| | NO_{X} | 434 | 0 | 100 |
| | N₂O | 308 | 33 | 89 |
| Gesamt | N₂O | | | 97 |
| | NOₓ | | | 100 |

Die Ergebnisse aus Tabelle 1 zeigen, dass bei nicht erfindungsgemäßer Durchführung.eines zweistufigen Verfahrens, bei dem in der zweiten Stufe das NOₓ durch chemische Umsetzung mit einem Reduktionsmittel und das N₂O durch katalytische Zersetzung in Stickstoff und Sauerstoff abgebaut werden, ein hoher Abbaugrad an NOₓ erzielt wird, dass aber nur ein geringer Teil des N₂O abgebaut wird.

Die Ergebnisse aus Tabelle 2 zeigen, dass mit einem nicht erfindungsgemäßen einstufigen Verfahren, bei dem sowohl NOₓ als auch N₂O durch chemische Umsetzung mit einem Reduktionsmittel abgebaut werden, zwar ein hoher Abbaugrad an Stickoxiden erzielt wird, dass aber sehr hohe Mengen an Reduktionsmittel eingesetzt werden müssen.

Die Ergebnisse aus Tabelle 3 zeigen, dass bei erfindungsgemäßer Durchführung eines zweistufigen Verfahrens, bei dem in der ersten Stufe der größte Teil des N₂O katalytisch zersetzt wird und in der zweiten Stufe sowohl NOₓ als auch N₂O durch chemische Umsetzung mit einem Reduktionsmittel abgebaut werden, ein sehr hoher Abbaugrad an NOₓ und N₂O erzielt wird bei im Vergleich zu Beispiel 2 deutlich gemindertem Bedarf an Reduktionsmittel.

## Patentansprüche

1. Verfahren zur Minderung des Gehalts von NOₓ und N₂O in Gasen umfassend die Massnahmen:
a) Leiten des N₂O und NOₓ enthaltenden Gases über zwei Katalysatorbetten, von denen das erste einen Katalysator für die Zersetzung von N₂O in Stickstoff und Sauerstoff enthält und das zweite Katalysatorbett einen Katalysator für die chemische Umsetzung von NOₓ und N₂O mit einem Reduktionsmittel enthält,
b) Auswahl von Temperatur, Druck und Raumgeschwindigkeit im ersten Katalysatorbett, so dass in diesem ein Abbau des N₂O-Gehalts des Gases um höchstens bis zu 95% erfolgt, bezogen auf den N₂O Gehalt am Eingang des ersten Katalysatorbettes, und
c) Zugabe eines Reduktionsmittels für NOₓ und eines Reduktionsmittels für N₂O zwischen dem ersten und zweiten Katalysatorbett in einer solchen Menge, die für den chemischen Abbau des gesamten NOₓ und mindestens 50 % des N₂O, bezogen auf den N₂O Gehalt am Eingang des zweiten Katalysatorbettes, ausreicht, wobei
als Reduktionsmittel für NOₓ und als Reduktionsmittel für N₂O Ammoniak eingesetzt wird.

2. Verfahren nach Anspruch 1, **dadurch gekennzeichnet, dass** im ersten und zweiten Katalysatorbett Temperaturen von weniger als 500°C, vorzugsweise zwischen 350 bis 450°C eingestellt werden.

3. Verfahren nach Anspruch 1, **dadurch gekennzeichnet, dass** im ersten und zweiten Katalysatorbett Gasdrucke von mindestens 2 bar, vorzugsweise im Bereich von 4 bis 25 bar, eingestellt werden.

4. Verfahren nach Anspruch 1, **dadurch gekennzeichnet, dass** das NOₓ und N₂O enthaltende Gas mit einer Raumgeschwindigkeit von 5.000 bis 50.000 h⁻¹, bezogen auf das addierte Katalysatorvolumen beider Katalysatorbetten über diese geleitet wird.

5. Verfahren nach Anspruch 1, **dadurch gekennzeichnet, dass** in mindestens einem der Katalysatorbetten mit Metall beladene Zeolith-Katalysatoren, vorzugsweise mit Eisen beladene Zeolith-Katalysatoren, eingesetzt werden.

6. Verfahren nach Anspruch 5, **dadurch gekennzeichnet, dass** der oder die mit Eisen beladenen Zeolithe vom Typ MFI, BEA, FER, MOR, FAU und/oder MEL sind.

7. Verfahren nach Anspruch 6, **dadurch gekennzeichnet, dass** im ersten Katalysatorbett ein mit Eisen beladenener Zeolith vom Typ MFI und/oder FER gewählt wird.

8. Verfahren nach Anspruch 6, **dadurch gekennzeichnet, dass** im zweiten Katalysatorbett ein mit Eisen beladenener Zeolith vom Typ MFI und/oder BEA gewählt wird.

9. Verfahren nach Anspruch 6, **dadurch gekennzeichnet, dass** im ersten und zweiten Katalysatorbett ein mit Eisen beladener Zeolith vom Typ MFI, insbesondere ein mit Eisen beladener ZSM-5 Zeolith gewählt wird.

10. Verfahren nach Anspruch 1, **dadurch gekennzeichnet, dass** in mindestens einem Katalysatorbett mit Eisen beladene Zeolithe eingesetzt werden, die mit Wasserdampf behandelt worden sind.

11. Verfahren nach Anspruch 1, **dadurch gekennzeichnet, dass** als Katalysatoren in mindestens einem Katalysatorbett mit Eisen beladene Zeolithe eingesetzt werden, bei denen das Verhältnis von Extra-Gitter-Aluminium zu Gitter-Aluminium mindestens 0,5 beträgt.

12. Verfahren nach Anspruch 1, **dadurch gekennzeichnet, dass** Ammoniak als Reduktionsmittel für NOₓ in einer Menge von 0,9 bis 2,5, vorzugsweise 0,9 bis 1,4, und besonders bevorzugt 1,0 bis 1,2 molaren Anteilen, bezogen auf einen molaren Anteil an NOₓ, und dass Ammoniak als Reduktionsmittel für N₂O in einer Menge von 0,5 bis 2,0, vorzugsweise 0,8 bis 1 ,8 molaren Anteilen, bezogen auf einen molaren Anteil an abzubauendem N₂O, eingesetzt werden.

13. Verfahren nach Anspruch 1, **dadurch gekennzeichnet, dass** dieses in den Prozess der, Salpetersäureproduktion integriert ist.

14. Verfahren nach Anspruch 1, **dadurch gekennzeichnet, dass** dieses in den Prozess des Betriebes einer Gasturbine integriert ist.

15. Verfahren nach Anspruch 1, **dadurch gekennzeichnet, dass** dieses in den Prozess des Betriebes eines Kraftwerks integriert ist.

## Claims

1. Method of reducing the content of NOₓ and N₂O in gases, which comprises the measures:
a) passage of the N₂O- and NOₓ-containing gas over two catalyst beds of which the first containing a catalyst for the decomposition of N₂O into nitrogen and oxygen and the second catalyst bed containing a catalyst for the chemical reaction of NOₓ and N₂O with a reducing agent,
b) selection of temperature, pressure and space velocity in the first catalyst bed so that the decrease in the N₂O content of the gas occurring in this is not more than 95%, based on the N₂O content at the entrance of the first catalyst bed, and
c) addition of a reducing agent for NOₓ and a reducing agent for N₂O between the first and second catalyst beds in an amount sufficient for chemical removal of all of the NOₓ and at least 50% of the N₂O, based on the N₂O content at the entrance of the second catalyst bed, wherein
ammonia is used as reducing agent for NOₓ and as reducing agent for N₂O.

2. Method according to Claim 1, **characterized in that** temperatures of less than 500°C, preferably from 350 to 450°C, are set in the first and second catalyst beds.

3. Method according to Claim 1, **characterized in that** gas pressures of at least 2 bar, preferably in the range from 4 to 25 bar, are set in the first and second catalyst beds.

4. Method according to Claim 1, **characterized in that** the NOₓ- and N₂O-containing gas is passed over the catalyst beds at a space velocity of from 5000 to 50 000 h⁻¹, based on the summed catalyst volume of the two catalyst beds.

5. Method according to Claim 1, **characterized in that** metal-laden zeolite catalysts, preferably iron-laden zeolite catalysts, are used in at least one of the catalyst beds.

6. Method according to Claim 5, **characterized in that** the iron-laden zeolite or zeolites is/are of the MFI, BEA, FER, MOR, FAU and/or MEL type.

7. Method according to Claim 6, **characterized in that** an iron-laden zeolite of the MFI and/or FER type is selected in the first catalyst bed.

8. Method according to Claim 6, **characterized in that** an iron-laden zeolite of the MFI and/or BEA type is selected in the second catalyst bed.

9. Method according to Claim 6, **characterized in that** an iron-laden zeolite of the MFI type, in particular an iron-laden ZSM-5 zeolite, is selected in the first and second catalyst beds.

10. Method according to Claim 1, **characterized in that** iron-laden zeolites which have been treated with steam are used in at least one catalyst bed.

11. Method according to Claim 1, **characterized in that** iron-laden zeolites in which the ratio of extra-lattice aluminium to lattice aluminium is at least 0.5 are used as catalysts in at least one catalyst bed.

12. Method according to Claim 1, **characterized in that** ammonia is used as reducing agent for NOₓ in an amount of from 0.9 to 2.5 mol, preferably from 0.9 to 1.4 mol and particularly preferably from 1.0 to 1.2 mol per mol of NOₓ and **in that** ammonia is used as reducing agent for N₂O in an amount of from 0.5 to 2.0 mol, preferably from 0.8 to 1.8 mol, per mol of N₂O to be removed.

13. Method according to Claim 1, **characterized in that** it is integrated into the process for nitric acid production.

14. Method according to Claim 1, **characterized in that** it is integrated into the process of operating a gas turbine.

15. Method according to Claim 1, **characterized in that** it is integrated into the process of operating a power station.

## Revendications

1. Procédé de réduction de la teneur en NOₓ et N₂O dans des gaz, comprenant les mesures suivantes :
a) le passage du gaz contenant N₂O et NOₓ sur deux lits catalytiques, parmi lesquels le premier contient un catalyseur pour la décomposition de N₂O en azote et oxygène et le second lit catalytique contient un catalyseur pour la réaction chimique de NOₓ et N₂O avec un réducteur,
b) le choix d'une température, d'une pression et d'une vitesse spatiale dans le premier lit catalytique telles qu'une réduction de la teneur en N₂O du gaz d'au plus 95 % ait lieu dans celui-ci, par rapport à la teneur en N₂O à l'entrée du premier lit catalytique, et
c) l'ajout d'un réducteur pour NOₓ et d'un réducteur pour N₂O entre le premier et le second lit catalytique en une quantité suffisante pour la décomposition chimique de la totalité de NOₓ et d'au moins 50 % de N₂O, par rapport à la teneur en N₂O à l'entrée du second lit catalytique,
de l'ammoniac étant utilisé en tant que réducteur pour NOₓ et en tant que réducteur pour N₂O.

2. Procédé selon la revendication 1, **caractérisé en ce que** des températures de moins de 500 °C, de préférence comprises entre 350 et 450 °C, sont ajustés dans le premier et le second lit catalytique.

3. Procédé selon la revendication 1, **caractérisé en ce que** des pressions de gaz d'au moins 2 bar, de préférence dans la plage allant de 4 à 25 bar, sont ajustées dans le premier et le second lit catalytique.

4. Procédé selon la revendication 1, **caractérisé en ce que** le gaz contenant NOₓ et N₂O passe à une vitesse spatiale de 5 000 à 50 000 h⁻¹, par rapport au volume de catalyseur ajouté des deux lits catalytiques, sur ceux-ci.

5. Procédé selon la revendication 1, **caractérisé en ce que** des catalyseurs de zéolithes chargés avec un métal, de préférence des catalyseurs de zéolithes chargés avec du fer, sont utilisés dans au moins un des lits catalytiques.

6. Procédé selon la revendication 5, **caractérisé en ce que** la ou les zéolithes chargées avec du fer sont de type MFI, BEA, FER, MOR, FAU et/ou MEL.

7. Procédé selon la revendication 6, **caractérisé en ce qu'**une zéolithe de type MFI et/ou FER chargée avec du fer est choisie dans le premier lit catalytique.

8. Procédé selon la revendication 6, **caractérisé en ce qu'**une zéolithe de type MFI et/ou BEA chargée avec du fer est choisie dans le second lit catalytique.

9. Procédé selon la revendication 6, **caractérisé en ce qu'**une zéolithe de type MFI chargée avec du fer, notamment une zéolithe ZSM-5 chargée avec du fer, est choisie dans le premier et le second lit catalytique.

10. Procédé selon la revendication 1, **caractérisé en ce que** des zéolithes chargées avec du fer qui ont été traitées avec de la vapeur d'eau sont utilisées dans au moins un lit catalytique.

11. Procédé selon la revendication 1, **caractérisé en ce que** des zéolithes chargées avec du fer dans lesquelles le rapport entre l'aluminium extra-réseau et l'aluminium réseau est d'au moins 0,5 sont utilisées en tant que catalyseurs dans au moins un lit catalytique.

12. Procédé selon la revendication 1, **caractérisé en ce que** de l'ammoniac est utilisé en tant que réducteur pour NOₓ en une quantité de 0,9 à 2,5, de préférence de 0,9 à 1,4 et de manière particulièrement préférée de 1,0 ° à 1,2 fraction molaire, par rapport à une fraction molaire de NOₓ, et **en ce que** de l'ammoniac est utilisé en tant que réducteur pour N₂O en une quantité de 0,5 à 2,0, de préférence de 0,8 à 1,8 fraction molaire, par rapport à une fraction molaire de N₂O à décomposer.

13. Procédé selon la revendication 1, **caractérisé en ce que** celui-ci est intégré dans le procédé de production d'acide nitrique.

14. Procédé selon la revendication 1, **caractérisé en ce que** celui-ci est intégré dans le procédé d'exploitation d'une turbine à gaz.

15. Procédé selon la revendication 1, **caractérisé en ce que** celui-ci est intégré dans le procédé d'exploitation d'une centrale électrique.
